# FASCICULE DE BREVET EUROPEEN

(11) **EP 4 090 565 B1**
(45) Date de publication et mention de la délivrance du brevet: **08.05.2024**
(21) Numéro de dépôt: 20816291.7
(22) Date de dépôt: 09.11.2020
(51) Int. Cl.: B60W 30/14, B60W 30/18, B60W 40/02

(54) **PROCÉDÉ ET DISPOSITIF DE CONTRÔLE D'UN VEHICULE**
VERFAHREN UND VORRICHTUNG ZUM STEUERN EINES FAHRZEUGS
METHOD AND DEVICE FOR CONTROLLING A VEHICLE

(30) Priorité: 15.01.2020 FR 2000368
(43) Date de publication de la demande: 23.11.2022
(73) Titulaire: Stellantis Auto SAS, 78300 Poissy (FR)
(72) Inventeur: HAOUAT, Nada, 92290 Chatenay Malabry (FR); VANPOPERINGHE, Elodie, 92100 Boulogne Billancourt (FR); ATTIA, Rachid, 78000 Versailles (FR)
(86) Numéro de dépôt international: PCT/FR2020/052044
(87) Numéro de publication internationale: WO 2021/144509

(56) Documents cités:
- EP-A1- 3 517 362
- FR-A1- 3 016 571
- JP-A- 2018 195 301
- US-A1- 2019 121 362

## Description

### Domaine technique

L'invention concerne les procédés et dispositifs de contrôle d'un véhicule, notamment automobile. L'invention concerne également un procédé et un dispositif de détermination d'un type de véhicule à partir des feux arrière de ce véhicule.

### Arrière-plan technologique

Avec le développement du réseau routier et l'augmentation du nombre de voies de circulation, la sécurité routière devient un sujet de préoccupation important. En effet, avec le nombre de véhicules qui augmente sur le réseau routier, les risque de collisions augmentent, notamment sur les routes à plusieurs voies de circulation.

Pour améliorer la sécurité routière, certains véhicules sont équipés de fonctions ou système(s) ou d'aide à la conduite, dit ADAS (de l'anglais « Advanced Driver-Assistance System » ou en français « Système d'aide à la conduite avancé »). Pour assurer le bon fonctionnement de ces systèmes d'aide à la conduite, une bonne connaissance de l'environnement autour du véhicule est nécessaire, notamment du ou des véhicules circulant autour du véhicule, par exemple devant le véhicule.

On connait par le document EP3517362 un dispositif de commande d'éclairage, un procédé de commande d'éclairage et un outil d'éclairage pour véhicule.

### Résumé de l'invention

Un objet de la présente invention est d'améliorer la connaissance de l'environnement d'un véhicule considéré.

Un autre objet de la présente invention est d'améliorer le contrôle d'un véhicule en fonction de son environnement proche.

Selon un premier aspect, l'invention concerne un procédé de contrôle d'un premier véhicule, le procédé comprenant les étapes suivantes :
- réception d'au moins une image d'au moins un feu arrière d'un deuxième véhicule circulant devant le premier véhicule ;
- détermination d'un type du deuxième véhicule à partir de la au moins une image ;
- contrôle du premier véhicule en fonction du type du deuxième véhicule.

La détermination comprend une classification du au moins un feu arrière et une reconnaissance du type de véhicule associé à le au moins un feu arrière à partir de la au moins une image.

Selon une autre variante, la classification et la reconnaissance sont mises en oeuvre par apprentissage machine.

Selon une autre variante, la détermination est basée sur un ou plusieurs des critères suivants :
- nombre de feux arrière dans la au moins une image ; et/ou
- distance entre deux feux arrière ; et/ou
- dimension du au moins un feu arrière.

Selon encore une variante, le contrôle comprend au moins un des contrôles suivants :
- contrôle de vitesse du premier véhicule ;
- contrôle d'une distance entre le premier véhicule et le deuxième véhicule ;
- contrôle du dépassement du deuxième véhicule par le premier véhicule.

Selon une variante additionnelle, le contrôle est en outre fonction d'informations représentatives de l'environnement du premier véhicule.

Selon un deuxième aspect, l'invention concerne un dispositif de contrôle d'un premier véhicule, le dispositif comprenant une mémoire associée à un processeur configuré pour mettre en oeuvre les étapes du procédé selon le premier aspect de l'invention.

Selon un aspect non couvert par les revendications, il est décrit un système comprenant un dispositif tel que décrit ci-dessus selon le deuxième aspect de l'invention et au moins une caméra.

Selon un troisième aspect, l'invention concerne un véhicule, par exemple de type automobile, comprenant un dispositif tel que décrit ci-dessus selon le deuxième aspect de l'invention.

Selon un quatrième aspect, l'invention concerne un programme d'ordinateur selon la revendication 9.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un aspect non couvert par les revendications, il est décrit un support d'enregistrement lisible par un ordinateur sur lequel est enregistré un programme d'ordinateur comprenant des instructions pour l'exécution des étapes du procédé selon le premier aspect de l'invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon l'invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de l'invention ressortiront de la description des modes de réalisation non limitatifs de l'invention ci-après, en référence aux figures 1 à 7 annexées, sur lesquelles :
[Fig. 1] illustre de façon schématique un environnement routier pour véhicule, selon un exemple de réalisation particulier de la présente invention ;
[Fig. 2] illustre de façon schématique une image d'un deuxième véhicule prise par un premier véhicule suivant le deuxième véhicule dans l'environnement routier de la figure 1, selon un exemple de réalisation particulier de la présente invention ;
[Fig. 3] illustre schématiquement la détermination d'un premier type de véhicule à partir d'une image telle que l'image de la figure 2, selon un exemple de réalisation particulier de la présente invention ;
[Fig. 4] illustre schématiquement la détermination d'un deuxième type de véhicule à partir d'une image telle que l'image de la figure 2, selon un exemple de réalisation particulier de la présente invention ;
[Fig. 5] illustre schématiquement la détermination d'un troisième type de véhicule à partir d'une image telle que l'image de la figure 2, selon un exemple de réalisation particulier de la présente invention ;
[Fig. 6] illustre schématiquement un dispositif configuré pour contrôler un premier véhicule de l'environnement routier de la figure 1, selon un exemple de réalisation particulier de la présente invention ;
[Fig. 7] illustre un organigramme des différentes étapes d'un procédé de contrôle d'un premier véhicule de l'environnement routier de la figure 1, selon un exemple de réalisation particulier de la présente invention.

### Description des modes de réalisation

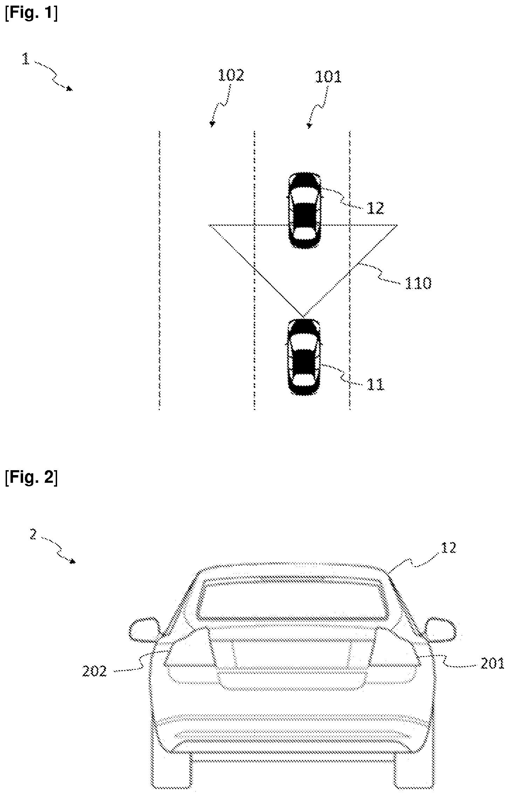

Un procédé et un dispositif de contrôle d'un premier véhicule vont maintenant être décrits dans ce qui va suivre en référence conjointement aux figures 1 à 7. Des mêmes éléments sont identifiés avec des mêmes signes de référence tout au long de la description qui va suivre.

Selon un exemple particulier et non limitatif de réalisation de l'invention, un procédé de contrôle d'un premier véhicule circulant derrière un deuxième véhicule comprend la réception, par exemple par un calculateur embarqué dans le premier véhicule, d'une ou plusieurs images acquises par au moins une caméra embarquée dans le premier véhicule. Cette ou ces images correspondent à une vue arrière du deuxième véhicule et comprennent une représentation du ou des feux arrière du deuxième véhicule. Le type de véhicule correspondant au deuxième véhicule est déterminé, par exemple par le calculateur embarqué dans le premier véhicule, à partir de la ou les images des feux arrière du deuxième véhicule. Le premier véhicule est contrôlé, par exemple le comportement du premier véhicule vis-à-vis du deuxième véhicule est contrôlé, en fonction du type du deuxième véhicule.

La détermination du type d'un deuxième véhicule précédant un premier véhicule à partir d'image(s) des feux arrière du deuxième véhicule offre une alternative fiable aux méthodes connues de classification de véhicule, par exemple dans des conditions environnementales (par exemple la nuit) où les méthodes classiques trouvent leurs limites.

Le contrôle du premier véhicule suivant le deuxième véhicule en fonction du type du deuxième véhicule déterminé à partir d'images des feux arrière permet d'améliorer la sécurité sur les routes en adaptant le comportement du premier véhicule au type du deuxième véhicule, le type étant déterminé de manière fiable via l'analyse d'une ou plusieurs images des feus arrières du deuxième véhicule.

[Fig. 1] illustre schématiquement un environnement routier 1, selon un exemple de réalisation particulier et non limitatif de la présente invention.

La figure 1 illustre un environnement routier 1 comprenant par exemple une route à plusieurs voies de circulation 101, 102, c'est-à-dire avec plusieurs voies de circulation selon un sens de circulation donné. L'environnement routier 1 correspond par exemple à une portion de voie rapide, par exemple une portion à 2 voies de circulation dans chaque sens de circulation (2 voies dans un sens et 2 voies dans l'autre sens).

Selon un autre exemple, l'environnement routier 1 comprend une route à deux voies de circulation 101, 102 à sens de circulation contraires. L'environnement routier 1 correspond à une portion de route à 1 seule voie de circulation pour chaque sens de circulation selon cet autre exemple.

Bien entendu, l'invention n'est pas limitée à ces exemples particuliers et s'étend à tous les environnements routiers, c'est-à-dire à tous les types de routes quel que soit le nombre de voies de circulation.

Selon l'exemple particulier et non limitatif de la figure 1, un premier véhicule 11 circule sur une première voie de circulation 101 et suit à une distance donnée un deuxième véhicule 12 circulant sur cette même première voie de circulation 101. Le premier véhicule 11 et le deuxième véhicule 12 correspondent par exemple chacun à un véhicule automobile. Bien entendu, l'invention s'applique à tout type de véhicule terrestre, le premier véhicule 11 et/ou le deuxième véhicule 12 correspondant par exemple à un car, un bus, un camion, un véhicule utilitaire ou une motocyclette, aux véhicules à moteur thermique, électrique ou hybride.

Selon un autre exemple, le premier véhicule 11 circule sur la deuxième voie de circulation 102 (respectivement la première voie de circulation 101) et le deuxième véhicule 12 circule sur la première voie de circulation 101 (respectivement la deuxième voie de circulation 102) devant le premier véhicule 11.

Le premier véhicule 11 correspond par exemple à un véhicule embarquant un ou plusieurs systèmes d'aide à la conduite, dits systèmes ADAS (de l'anglais « Advanced Driver-Assistance System » ou en français « Système d'aide à la conduite avancé »), tels que par exemple un système de régulation adaptative de vitesse, dit ACC (de l'anglais « Adaptice Cruise Control ») ayant pour fonction première la régulation automatiquement, de façon adaptative, de la vitesse des véhicules qui en sont équipés en fonction de leur environnement et/ou un système d'aide au maintien dans la file de circulation, dit LKA (de l'anglais « Lane-Keeping-Assist ») ayant pour fonction d'assister le conducteur pour maintenir le véhicule dans sa voie de circulation et/ou un système d'aide de changement de voie de circulation.

Le premier véhicule correspond par exemple à un véhicule avec un niveau d'autonomie déterminé, par exemple un niveau d'autonomie supérieur au niveau 2 ou au niveau 3. Le niveau d'autonomie du premier véhicule 11 correspond par exemple à un des 5 niveaux de la classification selon l'agence fédérale américaine chargée de la sécurité routière ou à un des 6 niveaux de la classification de l'organisation internationale des constructeurs automobiles.

Les 5 niveaux de la classification de l'agence fédérale chargée de la sécurité routière sont :
- niveau 0 : aucune automatisation, le conducteur du véhicule contrôle totalement les fonctions principales du véhicule (moteur, accélérateur, direction, freins) ;
- niveau 1 : assistance au conducteur, l'automatisation est active pour certaines fonctions du véhicule, le conducteur gardant un contrôle global sur la conduite du véhicule ; le régulateur de vitesse fait partie de ce niveau, comme d'autres aides telles que l'ABS (système antiblocage des roues) ou l'ESP (électro-stabilisateur programmé) ;
- niveau 2 : automatisation de fonctions combinées, le contrôle d'au moins deux fonctions principales est combiné dans l'automatisation pour remplacer le conducteur dans certaines situations ; par exemple, le régulateur de vitesse adaptatif combiné avec le centrage sur la voie permet à un véhicule d'être classé niveau 2, tout comme l'aide au stationnement (de l'anglais « Park assist ») automatique ;
- niveau 3 : conduite autonome limitée, le conducteur peut céder le contrôle complet du véhicule au système automatisé qui sera alors en charge des fonctions critiques de sécurité ; la conduite autonome ne peut cependant avoir lieu que dans certaines conditions environnementales et de trafic déterminées (uniquement sur autoroute par exemple) ;
- niveau 4 : conduite autonome complète sous conditions, le véhicule est conçu pour assurer seul l'ensemble des fonctions critiques de sécurité sur un trajet complet ; le conducteur fournit une destination ou des consignes de navigation mais n'est pas tenu de se rendre disponible pour reprendre le contrôle du véhicule ;
- niveau 5 : conduite complètement autonome sans l'aide de conducteur dans toutes les circonstances.

Le premier véhicule 11 est avantageusement équipé d'une ou plusieurs caméras vidéo arrangés dans ou sur le premier véhicule 11 de manière à faire l'acquisition d'images de l'environnement situé devant le premier véhicule 11. Cette ou ces caméras permettent notamment l'acquisition d'images du deuxième véhicule 12, notamment de l'arrière du deuxième véhicule 12. Un exemple d'une telle image est illustré en figure 2. Chaque caméra comprend une grille de capteurs photosensibles, optionnellement associée à un filtre couleur de type filtre Bayer, chaque capteur permettant l'acquisition d'un niveau de luminosité codé par exemple sur 8, 10 ou 12 bits.

Selon une variante de réalisation, le premier véhicule 11 embarque en outre un ou plusieurs systèmes de détection d'objet pour alimenter en données le ou les systèmes ADAS embarqués, pour compléter par exemple la connaissance de l'environnement du premier véhicule obtenue à partir des données des images obtenues par la ou les caméras équipant le premier véhicule 11. Un système de détection d'objet comprend par exemple des radars à ondes millimétriques arrangés sur le premier véhicule 11, par exemple à l'avant, à l'arrière, sur chaque coin avant/arrière du premier véhicule 11. Chaque radar est adapté pour émettre des ondes électromagnétiques et pour recevoir les échos de ces ondes renvoyées par un ou plusieurs objets, dans le but de détecter des obstacles et leurs distances vis-à-vis du premier véhicule 11 par exemple. Selon un autre exemple, un système de détection d'objet comprend un ou plusieurs LIDAR(s) (de l'anglais « Light Détection And Ranging », ou « Détection et estimation de la distance par la lumière » en français) et/ou une ou plusieurs caméras (associées ou non à un capteur de profondeur) pour détecter les objets dans l'environnement du premier véhicule 11, leur distance par rapport au premier véhicule 11 et éventuellement leur forme ou une partie de leur forme (par modélisation tridimensionnelle par exemple).

Dans une première opération, le premier véhicule 11, par exemple un calculateur du système embarqué du premier véhicule 11, reçoit une ou plusieurs images du ou des feux arrière du deuxième véhicule 12. Cette ou ces images sont reçues d'une ou plusieurs caméras embarquées dans le premier véhicule 11, au moins une caméra ayant l'environnement extérieur situé devant le premier véhicule 11 dans son champ de vision 110. Le champ de vision 110 couvre par exemple l'environnement extérieur devant le premier véhicule 11 selon un angle déterminé, par exemple égal à 120, 150 ou 180° par exemple, et sur une profondeur de quelques dizaines de mètres, par exemple 10, 20, 50 ou 100 m devant le premier véhicule 11.

L'acquisition et/ou la réception des images est par exemple mise en oeuvre automatiquement à intervalle réguliers, par exemple toutes les 20, 50, 100 ou 1000 ms. Selon une variante de réalisation, l'acquisition des images est déclenchée par un évènement déterminé, par exemple la détection d'un véhicule devant le premier véhicule par un système de détection d'objet embarqué dans le premier véhicule 11.

Dans une deuxième opération, le type du deuxième véhicule est déterminé à partir de la ou les images reçues. La détermination du type du deuxième véhicule est avantageusement obtenue par l'analyse de la ou les images reçues, par exemple en détectant la présence d'un ou plusieurs feux arrière et en déterminant le type du deuxième véhicule 12 à partir du ou des feux arrière détectés. Le type du deuxième véhicule appartient avantageusement à un ensemble de types de véhicule comprenant :
- un véhicule automobile ;
- un camion ;
- un car ;
- une motocyclette ;
- un vélo.

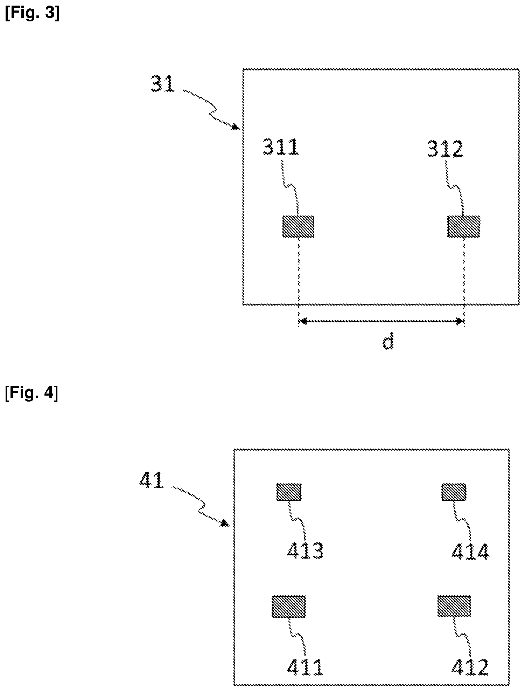

Des exemples de détermination du type du deuxième véhicule à partir d'une image de feux arrière sont fournis en regard des figures 3 à 5, décrites ci-dessous.

La détermination du type du deuxième véhicule 12 comprend par exemple les étapes suivantes :
- détection ou classification de feux arrière de véhicule dans chaque image reçue, par exemple en comparant chaque image reçue avec un ensemble d'images de référence comprenant des feux arrière de véhicule ;
- reconnaissance du type de véhicule associé aux feux arrières détectés dans la ou les images reçues, par exemple en comparant les feux arrières détectés avec un ou plusieurs critères d'un ensembles de critères comprenant : le nombre de feux arrière détecté dans l'image et/ou la distance déterminée entre deux feux arrières détectés (notamment la distance entre deux feux arrières alignés horizontalement, c'est-à-dire entre deux feux formant une ligne parallèle ou essentiellement parallèle au sol) et/ou les dimensions du ou des feux arrière détecté(s).

Selon une variante de réalisation, les étapes de détection et de reconnaissance ne forment qu'une seule étape de classification, la détermination du type de véhicule correspondant à une étape de classification du deuxième véhicule. Une telle étape de classification directe comprend avantageusement la comparaison du contenu de l'image avec plusieurs ensembles d'images de références, chaque ensemble d'images de référence étant associé à un type particulier de véhicule (c'est-à-dire par exemple véhicule automobile, car, camion, motocyclette, vélo), un ensemble d'images de référence associé à un type particulier comprenant un grand nombre d'images de référence représentant des feux arrière de véhicule du type particulier considéré. Par exemple, un ensemble d'images de référence de feux arrière de camion comprend un grand nombre d'exemple d'images de feux arrière de différents camions, par exemple plusieurs centaines, plusieurs milliers ou plus encore d'images de références de feux arrière de camion.

La détermination du type du deuxième véhicule (par exemple les étapes de classification et/ou de reconnaissance) est avantageusement obtenue par mise en oeuvre d'une méthode d'apprentissage machine (de l'anglais « machine learning »), par exemple mise en oeuvre par un réseau de neurones dans le cadre d'une méthode d'apprentissage profond (de l'anglais « deep learning ») mise en oeuvre par intelligence artificielle, pour un apprentissage supervisé ou non supervisé.

Une telle méthode d'apprentissage machine comprend une première étape dite d'apprentissage, c'est-à-dire la collecte du ou des ensembles d'images de référence pour former des classes d'objets (en l'occurrence des classes de feux arrière) auxquelles seront comparées la ou les images acquises par la ou les caméras du premier véhicule 11.

Un exemple de méthode de reconnaissance de véhicule par analyse d'image est par exemple décrit dans le document intitulé « Reconnaissance par vision du type d'un véhicule automobile », publié par X. Clady, P. Negri, M. Milgram et R. Poulenard dans Colloque MajecStic en 2006.

Selon une variante de réalisation, la détection d'un ou plusieurs feux arrière de véhicule dans la ou les images reçues est obtenue via une méthode d'analyse d'image connue de l'homme du métier, par exemple basée sur les cartes de saillance.

Dans une troisième opération, le premier véhicule 11 est contrôlé en fonction du type du deuxième véhicule déterminée à la deuxième opération. Le contrôle correspond par exemple au contrôle d'un ou plusieurs paramètres associés au comportement du premier véhicule 11, ce ou ces paramètres étant déterminés par un calculateur du système embarqué du premier véhicule 11, par exemple le calculateur mettant en oeuvre la première opération et la deuxième opération. Le contrôle du premier véhicule 11 comprend par exemple une ou plusieurs des actions suivantes :
- contrôle de la vitesse du premier véhicule pour l'adapter au type du deuxième véhicule 12 : par exemple, si le type du deuxième véhicule correspond à un camion et que le premier véhicule circule sur une voie rapide, la vitesse du premier véhicule 11 est adaptée pour éviter une collision avec le camion, la vitesse d'un camion étant limitée à 90 km/h ; si le type du deuxième véhicule correspond à un vélo, la vitesse du premier véhicule 11 est adaptée, par exemple diminuée ;
- contrôle de la distance entre le premier véhicule 11 et le deuxième véhicule 12, par exemple le contrôle de la distance latérale par rapport au deuxième véhicule 12 si un dépassement du deuxième véhicule 12 est décidé (par exemple si le type du deuxième véhicule 12 correspond à un vélo, un car ou un camion), et/ou le contrôle de la distance longitudinal (selon le sens de circulation) entre le premier véhicule 11 et le deuxième véhicule 12 (par exemple maintien d'une distance entre les véhicules en fonction du type du deuxième véhicule, la distance étant plus importance si le deuxième véhicule correspond à une automobile que si le deuxième véhicule correspond à un camion ou un vélo) ;
- contrôle du dépassement du deuxième véhicule 12 par le premier véhicule 11, le dépassement étant par exemple commandé lorsque le type du deuxième véhicule 12 correspond à un véhicule plus lent que le premier véhicule, par exemple un vélo ou un camion.

Selon une variante de réalisation, le contrôle du comportement du premier véhicule 11 est en outre fonction de l'environnement du premier véhicule 11, par exemple en fonction du type de la route (route à plusieurs voies de circulation, route où le dépassement est autorisé), en fonction de la présence d'autres véhicules (par exemple pour autoriser ou non un dépassement), en fonction des limitations de vitesse sur la portion de route empruntée (pour ajuster la vitesse du premier véhicule). Des informations représentatives de l'environnement sont par exemple obtenues par une analyse des images reçues (par exemple mise en oeuvre de la détection et de la reconnaissance des panneaux de signalisation ou d'objets tels que d'autres véhicules que le deuxième véhicule 12) et/ou à partir des données reçues des capteurs (par exemple radars et/ou lidar) du ou des systèmes de détection d'objet embarqués dans le premier véhicule 11.

[Fig. 2] illustre schématiquement une image 2 de l'arrière du deuxième véhicule 12 acquise par une caméra embarquée dans le premier véhicule 11, selon un exemple de réalisation particulier et non limitatif de la présente invention.

La figure 2 illustre une vue arrière du deuxième véhicule 12 telle que prise par une ou plusieurs caméras embarquées dans le premier véhicule 11. L'image 2 correspond à une matrice de pixels, une couleur étant associée à chaque pixel avec un niveau de luminance associé, codé sur un nombre de bits déterminés, par exemple 8, 10, 12 ou plus de bits. Le codage correspond par exemple à un codage de type HDR (de l'anglais « High Dynamic Range » ou en français « imagerie à grande gamme dynamique »), permettant de mieux faire ressortir les feux arrière 201, 202 notamment lorsque la luminosité de l'environnement du premier véhicule 11 est faible (par exemple image prise la nuit lorsque les feux de position arrière sont allumés).

Chaque feu arrière 201, 202 correspond à un feu ou une combinaison de feux de l'ensemble de feux arrière suivants :
- feu de position arrière ;
- feu stop ;
- feu de recul ;
- feu clignotant ;
- feu de gabarit ;
- feu de brouillard

Les feux 201 et 202 correspondent chacun à un groupe de pixels de l'image 2.

[Fig. 3] illustre schématiquement la détermination d'un type de véhicule à partir d'une image 31 des feux arrière du véhicule, selon un premier exemple de réalisation particulier et non limitatif de la présente invention.

Selon l'exemple particulier de la figure 3, l'image 31 comprend deux groupes de pixels 311, 312 correspondant chacun à un feu arrière. Les feux arrière 311, 312 sont distants l'un de l'autre d'une distance 'd' selon l'axe horizontal, c'est-à-dire selon l'axe parallèle au sol.

Le type du deuxième véhicule 12 associé aux feux arrière 311, 312 détectés dans l'image 31 correspond par exemple au type véhicule automobile, le nombre de feux étant égal à 2 et la distance 'd' correspondant à une distance inférieure à un seuil, ce seuil correspondant par exemple à la valeur maximale de distance séparant deux feux arrière pour un véhicule automobile.

Selon un autre exemple, le type du deuxième véhicule 12 associé aux feux arrière 311, 312 détectés dans l'image 31 correspond par exemple au type camion ou car, le nombre de feux étant égal à 2 et la distance 'd' correspondant à une distance supérieure à un seuil, ce seuil correspondant par exemple à la valeur maximale de distance séparant deux feux arrière pour un véhicule automobile.

Selon une variante de réalisation, les dimensions de chacun des feux (c'est-à-dire la largeur et la hauteur) sont comparées à des dimensions de référence des feux de chaque type de véhicule pour déterminer ou valider la détermination du type de véhicule.

[Fig. 4] illustre schématiquement la détermination d'un type de véhicule à partir d'une image 41 des feux arrière du véhicule, selon un deuxième exemple de réalisation particulier et non limitatif de la présente invention.

Selon l'exemple particulier de la figure 4, l'image 41 comprend quatre groupes de pixels 411, 412, 413 et 414 correspondant chacun à un feu arrière. Les feux arrière 411 et 412 dans la partie inférieure de l'image 41 correspondent par exemple à des feux de position arrière et les feux arrière 413 et 414 dans la partie supérieure de l'image 41 correspondent par exemple à des feux de gabarit.

Le type du deuxième véhicule 12 associé aux feux arrière 411 à 414 détectés dans l'image 41 correspond par exemple au type camion, le nombre de feux étant égal à 4 avec deux feux 411 et 412 à une première distance du sol et deux autres feux 413, 414 à une deuxième distance du sol supérieure à la première distance. Le nombre de feux et leurs dispositions les uns par rapport aux autres (notamment par rapport au sol) est caractéristique d'un camion.

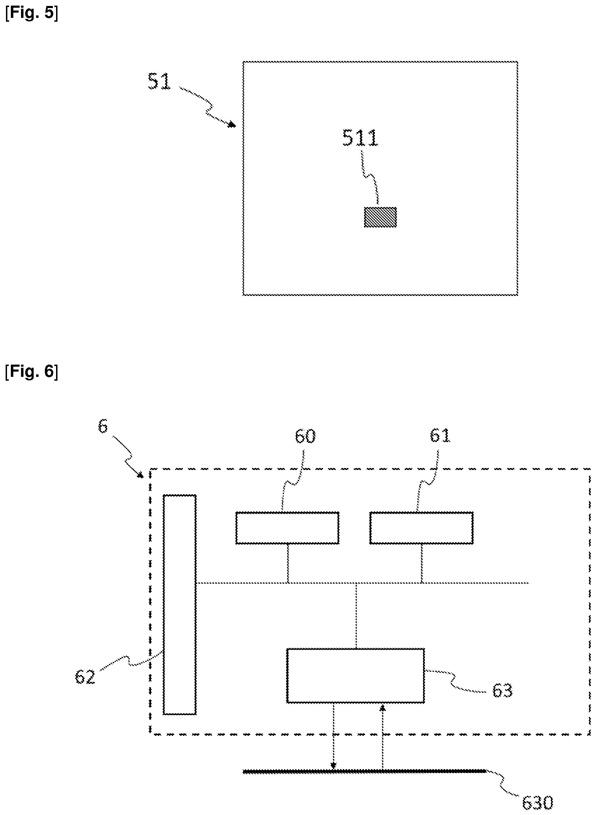

[Fig. 5] illustre schématiquement la détermination d'un type de véhicule à partir d'une image 51 des feux arrière du véhicule, selon un deuxième exemple de réalisation particulier et non limitatif de la présente invention.

Selon l'exemple particulier de la figure 5, l'image 51 comprend un groupe de pixel 511 correspondant à un unique feu arrière.

Le type du deuxième véhicule 12 associé à l'unique feu arrière 511 correspond par exemple au type motocyclette ou vélo.

Pour déterminer s'il s'agit d'une motocyclette ou d'un vélo, les dimensions du feu arrière sont par exemple déterminées et comparées à des dimensions de feux arrière caractéristiques d'une motocyclette et d'un vélo.

Selon un autre exemple, la vitesse du deuxième véhicule 12 est déterminée par le premier véhicule 11, par exemple par un système de détection embarqué dans le premier véhicule 11. La vitesse est comparée à un seuil (par exemple égal à 30 ou 40 km/h). Si la vitesse du deuxième véhicule 12 est supérieure à ce seuil alors il est déterminé que le deuxième véhicule est du type motocyclette.

[Fig. 6] illustre schématiquement un dispositif 6 configuré pour contrôler le premier véhicule 11, selon un exemple de réalisation particulier et non limitatif de la présente invention. Le dispositif 6 correspond par exemple à un dispositif embarqué dans le premier véhicule 11, par exemple un calculateur.

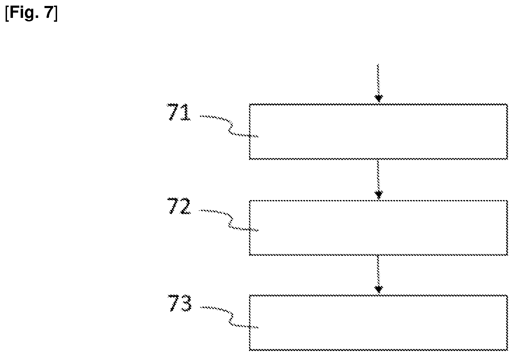

Le dispositif 6 est par exemple configuré pour la mise en oeuvre des opérations décrites en regard des figures 1 à 5 et/ou des étapes du procédé décrit en regard de la figure 7. Des exemples d'un tel dispositif 6 comprennent, sans y être limités, un équipement électronique embarqué tel qu'un ordinateur de bord d'un véhicule, un calculateur électronique tel qu'une UCE (« Unité de Commande Electronique »), un téléphone intelligent (de l'anglais « smartphone »), une tablette, un ordinateur portable. Les éléments du dispositif 6, individuellement ou en combinaison, peuvent être intégrés dans un unique circuit intégré, dans plusieurs circuits intégrés, et/ou dans des composants discrets. Le dispositif 6 peut être réalisé sous la forme de circuits électroniques ou de modules logiciels (ou informatiques) ou encore d'une combinaison de circuits électroniques et de modules logiciels. Selon différents modes de réalisation particuliers, le dispositif 6 est couplé en communication avec d'autres dispositifs ou systèmes similaires, par exemple par l'intermédiaire d'un bus de communication ou au travers de ports d'entrée / sortie dédiés.

Le dispositif 6 comprend un (ou plusieurs) processeur(s) 60 configurés pour exécuter des instructions pour la réalisation des étapes du procédé et/ou pour l'exécution des instructions du ou des logiciels embarqués dans le dispositif 6. Le processeur 60 peut inclure de la mémoire intégrée, une interface d'entrée/sortie, et différents circuits connus de l'homme du métier. Le dispositif 6 comprend en outre au moins une mémoire 61 correspondant par exemple une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 61.

Selon un mode de réalisation particulier et non limitatif, le dispositif 6 comprend un bloc 62 d'éléments d'interface pour communiquer avec des dispositifs externes, par exemple un serveur distant ou le « cloud », des capteurs embarqués, des dispositifs tels que radar ou caméra. Les éléments d'interface du bloc 62 comprennent une ou plusieurs des interfaces suivantes :
- interface radiofréquence RF, par exemple de type Bluetooth^{®} ou Wi-Fi^{®}, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Définition » en français) ;
- interface LIN (de l'anglais « Local Interconnect Network », ou en français « Réseau interconnecté local »).

Selon un autre mode de réalisation particulier, le dispositif 6 comprend une interface de communication 63 qui permet d'établir une communication avec d'autres dispositifs (tels que d'autres calculateurs du système embarqué, par exemple un calculateur contrôlant la ou les caméras embarquées dans le premier véhicule 11) via un canal de communication 630. L'interface de communication 63 correspond par exemple à un transmetteur configuré pour transmettre et recevoir des informations et/ou des données via le canal de communication 630. L'interface de communication 63 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay ou Ethernet.

Selon un mode de réalisation particulier supplémentaire, le dispositif 6 peut fournir des signaux de sortie à un ou plusieurs dispositifs externes, tels qu'un écran d'affichage, un ou des haut-parleurs et/ou d'autres périphériques via respectivement des interfaces de sortie non représentées.

[Fig. 7] illustre un organigramme des différentes étapes d'un procédé de contrôle d'un véhicule, par exemple du premier véhicule 11, selon un exemple de réalisation particulier et non limitatif de la présente invention. Le procédé est par exemple mis en oeuvre par un dispositif embarqué dans le premier véhicule 11 ou par le dispositif 6 de la figure 6.

Dans une première étape 71, une ou plusieurs images de feu(x) arrière d'un deuxième véhicule circulant devant le premier véhicule sont reçues, par exemple d'une ou plusieurs caméras embarquées dans le premier véhicule et capturant l'environnement situé devant le premier véhicule 11, ou d'un ou plusieurs calculateurs contrôlant la ou les caméras embarquées.

Dans une deuxième étape 72, le type du deuxième véhicule est déterminé à partir de la ou les images du ou des feux arrière du deuxième véhicule reçues à la première étape 71.

Dans une troisième étape 73, le premier véhicule 11 est contrôlé (un ou plusieurs paramètres du comportement du premier véhicule sont par exemple ajustés) en fonction du type du deuxième véhicule déterminé à la deuxième étape 72.

Les étapes 71 à 73 sont avantageusement réitérées au fur et à mesure du déplacement du premier véhicule 11 et/ou lorsqu'un nouveau véhicule est détecté devant le premier véhicule 11.

Bien entendu, l'invention ne se limite pas aux modes de réalisation décrits ci-avant mais s'étend à un procédé de détermination d'un type de véhicule, et au dispositif configuré pour la mise en oeuvre du procédé.

L'invention concerne également un système comprenant le dispositif 6 de la figure 6 relié à une ou plusieurs caméras, optionnellement par l'intermédiaire d'un ou plusieurs calculateurs contrôlant cette ou ces caméras. Un tel système correspond par exemple au système embarqué du premier véhicule 11 ou à une partie du système embarqué.

L'invention concerne également un véhicule, par exemple automobile ou plus généralement un véhicule à moteur terrestre, comprenant le dispositif 6 de la figure 6 ou le système décrit ci-dessus.

## Revendications

1. Procédé de contrôle d'un premier véhicule (11), ledit procédé comprenant les étapes suivantes :
- réception (71) d'au moins une image (2) d'au moins un feu arrière (201, 202) d'un deuxième véhicule (12) circulant devant ledit premier véhicule (11) ;
- détermination (72) d'un type dudit deuxième véhicule (12) à partir de ladite au moins une image (2) ;
- contrôle (73) dudit premier véhicule (11) en fonction du type dudit deuxième véhicule (12) ;
ladite détermination (72) comprend une classification dudit au moins un feu arrière (201, 202) et une reconnaissance du type de véhicule associé audit au moins un feu arrière (201, 202) à partir de ladite au moins une image (2).

2. Procédé selon la revendication 1, pour lequel ladite classification et ladite reconnaissance sont mises en oeuvre par apprentissage machine.

3. Procédé selon l'une des revendications 1 à 2, pour lequel ladite détermination (72) est basée sur un ou plusieurs des critères suivants :
- nombre de feux arrière dans ladite au moins une image (2) ;
- distance entre deux feux arrière ;
- dimension dudit au moins un feu arrière.

4. Procédé selon l'une des revendications 1 à 3, pour lequel ledit contrôle (73) comprend au moins un des contrôles suivants :
- contrôle de vitesse dudit premier véhicule (11) ;
- contrôle d'une distance entre le premier véhicule (11) et le deuxième véhicule (12) ;
- contrôle du dépassement du deuxième véhicule (12) par ledit premier véhicule (11).

5. Procédé selon l'une des revendications 1 à 4, pour lequel ledit contrôle (73) est en outre fonction d'informations représentatives de l'environnement dudit premier véhicule (11).

6. Procédé selon l'une des revendications 1 à 5, pour lequel ledit premier véhicule (11) est un véhicule autonome.

7. Dispositif (6) comprenant une mémoire (61) associée à au moins un processeur (60) configuré pour mettre en oeuvre les étapes du procédé selon l'une quelconque des revendications 1 à 6.

8. Véhicule (11) comprenant le dispositif (6) selon la revendication 7.

9. Produit programme d'ordinateur comportant des instructions qui, lorsque le programme est exécuté par un ordinateur, conduisent celui-ci à mettre en oeuvre la méthode selon l'une des revendications 1 à 6.

## Patentansprüche

1. Verfahren zur Steuerung eines ersten Fahrzeugs (11), wobei das Verfahren die folgenden Schritte umfasst:
- Empfang (71) mindestens eines Bildes (2) mindestens eines Rücklichts (201, 202) eines zweiten Fahrzeugs (12), das vor dem ersten Fahrzeug (11) fährt;
- Bestimmung (72) eines Typs des zweiten Fahrzeugs (12) aus dem mindestens einen Bild (2);
- Steuerung (73) des ersten Fahrzeugs (11) in Abhängigkeit vom Typ des zweiten Fahrzeugs (12);
die Bestimmung (72) eine Klassifizierung des mindestens einen Rücklichts (201, 202) und eine Erkennung des mit dem mindestens einen Rücklicht (201, 202) verbundenen Fahrzeugtyps aus dem mindestens einen Bild (2) umfasst..

2. Verfahren nach Anspruch 1, bei dem die Klassifizierung und die Erkennung durch maschinelles Lernen implementiert werden.

3. Verfahren nach einem der Ansprüche 1 bis 2, bei dem die Bestimmung (72) auf einem oder mehreren der folgenden Kriterien basiert:
- Anzahl der Rücklichter in dem mindestens einen Bild (2);
- Abstand zwischen zwei Rücklichtern;
- Abmessung des mindestens einen Rücklichts.

4. Verfahren nach einem der Ansprüche 1 bis 3, bei dem die Steuerung (73) mindestens eine der folgenden Steuerungen umfasst:
- Geschwindigkeitsregelung des ersten Fahrzeugs (11);
- Steuern eines Abstands zwischen dem ersten Fahrzeug (11) und dem zweiten Fahrzeug (12);
- Kontrolle des Überholens des zweiten Fahrzeugs (12) durch das erste Fahrzeug (11).

5. Verfahren nach einem der Ansprüche 1 bis 4, bei dem die Steuerung (73) auch eine Funktion von Informationen ist, die die Umgebung des ersten Fahrzeugs (11) repräsentieren.

6. Verfahren nach einem der Ansprüche 1 bis 5, bei dem das erste Fahrzeug (11) ein autonomes Fahrzeug ist.

7. Gerät (6), das einen Speicher (61) umfasst, der mit mindestens einem Prozessor (60) verbunden ist, der konfiguriert ist, die Schritte des Verfahrens nach einem der Ansprüche 1 bis 6 umzusetzen.

8. Fahrzeug (11) umfassend die Vorrichtung (6) nach Anspruch 7.

9. Computerprogrammprodukt mit Anweisungen, die bei Ausführung des Programms durch einen Computer diesen zur Durchführung des Verfahrens nach einem der Ansprüche 1 bis 6 veranlassen.

## Claims

1. Method for controlling a first vehicle (11), said method comprising the following steps:
- reception (71) of at least one image (2) of at least one rear light (201, 202) of a second vehicle (12) traveling in front of said first vehicle (11);
- determination (72) of a type of said second vehicle (12) from said at least one image (2);
- control (73) of said first vehicle (11) depending on the type of said second vehicle (12);
said determination (72) comprises a classification of said at least one rear light (201, 202) and a recognition of the type of vehicle associated with said at least one rear light (201, 202) from said at least one image (2).

2. Method according to claim 1, for which said classification and said recognition are implemented by machine learning.

3. Method according to one of claims 1 to 2, for which said determination (72) is based on one or more of the following criteria:
- number of rear lights in said at least one image (2);
- distance between two rear lights;
- dimension of said at least one rear light.

4. Method according to one of claims 1 to 3, for which said control (73) comprises at least one of the following controls:
- speed control of said first vehicle (11);
- controlling a distance between the first vehicle (11) and the second vehicle (12);
- control of overtaking of the second vehicle (12) by said first vehicle (11).

5. Method according to one of claims 1 to 4, for which said control (73) is also a function of information representative of the environment of said first vehicle (11).

6. Method according to one of claims 1 to 5, for which said first vehicle (11) is an autonomous vehicle.

7. Device (6) comprising a memory (61) associated with at least one processor (60) configured to implement the steps of the method according to any one of claims 1 to 6.

8. Vehicle (11) comprising the device (6) according to claim 7.

9. Computer program product comprising instructions which, when the program is executed by a computer, lead it to implement the method according to one of claims 1 to 6.
